# FASCICULE DE BREVET EUROPEEN

(11) **EP 0 769 038 B1**
(45) Date de publication et mention de la délivrance du brevet: **04.03.1998**
(21) Numéro de dépôt: 95923412.1
(22) Date de dépôt: 19.06.1995
(51) Int. Cl.: C09D 4/00

(54) **COMPOSITIONS DE RESINE POUR MORTIER SYNTHETIQUE**
HARZZUSAMMENSETZUNG FÜR KUNSTMÖRTEL
SYNTHETIC MORTAR RESIN COMPOSITIONS

(30) Priorité: 07.07.1994 FR 9408520
(43) Date de publication de la demande: 23.04.1997
(73) Titulaire: CRAY VALLEY SA, 92800 Puteaux (FR); DWS DEGUPLAST ,SOCIETE A RESPONSABILITE LIMITEE DE DROIT LUXEMBOURGEOIS, 2128 Luxembourg (LU)
(72) Inventeur: LAPAIRY, Jean-Claude, F-60000 Beauvais (FR)
(74) Mandataire: Chaillot, Geneviève
(86) Numéro de dépôt international: FR9500811
(87) Numéro de publication internationale: WO9601876

(56) Documents cités:
- EP-A- 0 555 117
- FR-A- 2 301 542

## Description

La présente invention se rapporte à des compositions de résine pour mortier, le mortier synthétique correspondant, son procédé de fabrication et leur application au revêtement de sols et parois.

Pour le revêtement des sols on connaît déjà des mortiers à base de résines époxy, dont le durcissement leur permet un temps de manipulation suffisamment long pour effectuer des réparations ou retouches au cours de la pose. Toutefois la viscosité élevée des résines époxy interdit l'incorporation d'un taux élevé de charges et conduit donc à des revêtements possédant une faible résistance à la compression. D'autre part le durcissement de la résine époxy exige l'emploi de produits aminés relativement toxiques et donc difficilement supportables par les manipulateurs. Enfin la faible vitesse de durcissement interdit la réalisation rapide de chantiers et immobilise durant plusieurs jours les locaux dans lesquels le revêtement de sol doit être posé.

On connaît aussi le revêtement de sols au moyen de mortiers à base de résine polyuréthanes. Les sols ainsi obtenus présentent une bonne résistance chimique et une souplesse qui les rend confortables pour l'utilisateur. Par contre le durcissement de la résine étant sensible à l'humidité de l'air ambiant, sa vitesse est tributaire du taux d'humidité du local à revêtir et donc n'est pas contrôlable. Comme pour les résines époxy, leur très forte viscosité limite la vitesse d'exécution du chantier.

Enfin on connaît aussi le revêtement de sols au moyen de mortiers à base de résine de méthacrylate de méthyle. Leur faible viscosité et leur réactivité élevée permettent l'obtention de bonnes propriétés mécaniques et une rapidité d'exécution du chantier inégalée. Elles autorisent en outre la réalisation de chantiers à des températures très proches de 0°C, ce qui n'est le cas ni des résines époxy ni des polyuréthanes. Par contre la résistance chimique des sols obtenus est insuffisante, notamment vis-à-vis d'acides et/ou d'oxydants puissants. D'autre part l'odeur déplaisante du méthacrylate de méthyle est difficile à supporter par les ouvriers qui appliquent la résine sur le chantier. Enfin, la résistance thermique des revêtements obtenus est faible, même à une température d'environ 80°C, ce qui les rend inadaptés au nettoyage à la vapeur.

Le document FR-A-2.301.542 décrit une composition de scellement durcissable à l'abri de l'air comprenant un peroxyde organique (à raison de 0,3 à 3% de la composition) et un mélange de :
- 50 à 95% en poids d'un di(méth)acrylate de bisphénol A alcoxylé, et
- 50 à 5% en poids d'un (méth)acrylate d'alkyle hydroxylé.

Le document EP-A-249.701 décrit une composition (telle qu'adhésif, matière de scellement, revêtement) à deux composants destinés à n'être mélangés qu'au moment de l'utilisation, le premier composant étant une résine époxy, polyester insaturé, vinyl ester, polyuréthane ou silicone et le second composant étant un agent de réticulation de ladite résine, caractérisée en ce que l'un au moins des deux composants est gélifié par l'addition d'un modificateur de viscosité utilisé à raison de :
- 5 à 15% en poids par rapport à l'agent de réticulation, et/ou,
- 2 à 23% en poids par rapport à la résine.

Le document EP-A-555.117 décrit une résine utilisable soit seule en tant que revêtement de sol soit, en association avec des charges minérales et/ou organiques, comme liant d'agglomération pour la confection de bétons synthétiques. Cette résine associe :
- à raison de 20 à 80% en poids, un diméthacrylate de bisphénol-A époxydé ou éthoxylé,
- à raison de 80 à 20% en poids, au moins un monomère (méth)acrylique tel que les méthacrylates de méthyle, d'isobornyle, de dicyclopentaneoxyéthyle, d'hydroxyéthyle, de 2-éthylhexyle, d'octyle et de nonyle,
- un peroxyde, tel que celui de benzyle, comme catalyseur de polymérisation,
- de la diméthylparatoluidine comme accélérateur de décomposition du peroxyde, et
- lors d'une polymérisation à l'air, de la paraffine destinée à constituer un film protecteur.

Il existe plusieurs types de problèmes techniques associés à l'enseignement du document EP-A-555.117, en premier lieu le fait que la résine ne peut être polymérisée à l'air en l'absence de paraffine. A cet égard, il est important de noter que la paraffine ne peut constituer un film protecteur efficace que si elle est incompatible avec tous les autres composants du système résineux. Or l'expérience montre que la paraffine est absolument compatible avec certains des monomères (méth)acryliques cités et donnés en exemple par le document EP-A-555.117, notamment l'acrylate de nonyle. Par ailleurs, l'emploi de paraffine entraîne un certain nombre de conséquences défavorables pour l'utilisation pratique de ces systèmes résineux dans des revêtements de sol et des bétons synthétiques. Tout d'abord, la paraffine induit une polymérisation très lente (le plus souvent de quelques heures jusqu'à plusieurs dizaines d'heures), donc mal contrôlée et accompagnée du maintien d'un phénomène de caractère poisseux en surface du revêtement qui interdit l'utilisation des locaux pendant une durée importante après l'application de la résine. D'autre part, la présence de paraffine confère au revêtement final un aspect mat qui, pour des raisons de choix esthétique, ne convient pas dans certains locaux.

On est donc à la recherche de résines permettant, dans un mortier synthétique, d'obtenir des revêtements de sol possédant les propriétés suivantes :
- bonne résistance à la compression et à l'abrasion.
- bonne résistance thermique, c'est-à-dire résistance à une température d'au moins 100°C, y compris en atmosphère humide. - bonne résistance aux agressions des agents chimiques tels que les solvants organiques, les acides et les bases.
- vitesse de polymérisation de la résine élevée pour permettre une pose rapide du revêtement et garantir une exécution rapide du chantier, tout en autorisant une utilisation normale du sol rapidement après la pose.
- absence d'odeur des composants de la résine, de manière à améliorer les conditions de travail des opérateurs sur le chantier et, lorsque le chantier progresse par tranches sur un lieu de travail, des travailleurs voisins ; cette condition est particulièrement importante à remplir car l'emploi de composants odoriférants comme le méthacrylate de méthyle exige le plus souvent la présence sur le chantier du représentant qualifié en matière de sécurité de l'entreprise ayant demandé les travaux et risque le plus souvent de perturber le travail des autres travailleurs de cette entreprise. De plus si le chantier doit être réalisé ou poursuivi après les jours normaux de travail, en particulier le samedi et le dimanche, alors dans de nombreux pays il sera nécessaire de rémunérer les opérateurs du chantier à un taux supérieur à celui des jours ordinaires et/ou d'obtenir une autorisation administrative préalable de la part des autorités locales compétentes en matière de réglementation du travail et/ou de respect de l'environnement.

La réunion de ces multiples exigences techniques permettrait de résoudre à la fois les problèmes techniques (tenue mécanique et thermique), économiques (vitesse de travail, et donc coût), d'hygiène et d'environnement posés dans l'industrie des bâtiments publics et industriels par le revêtement des sols et parois soit dans la construction neuve soit dans la réparation ou le renouvellement de sols et parois déjà existants.

La présente invention est basée sur la découverte surprenante que ces différents problèmes peuvent être résolus par l'emploi d'une composition de résine exempte de paraffine et comprenant à titre majoritaire au moins un di(alk)acrylate de bisphénol A alcoxylé de formule générale: 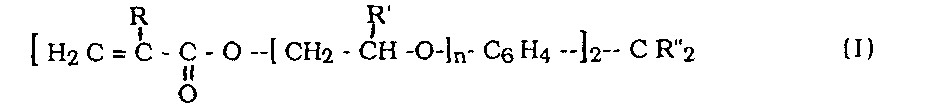 dans laquelle R, R' et R" sont choisis indépendamment l'un de l'autre parmi l'atome d'hydrogène et les radicaux alkyles ayant de 1 à 4 atomes de carbone et n est un entier de 1 à 10, ainsi qu'un accélérateur de polymérisation soigneusement sélectionné.

Un premier objet de la présente invention consiste donc en une composition de résine exempte de paraffine et conditionnée sous forme d'un système à deux composants dont le premier composant (A) comprend, pour 100 parties en poids :
- au moins 50 parties en poids d'au moins un di(alk)acrylate de bisphénol A alcoxylé de formule (I),
- de 0 à 46 parties en poids d'au moins un comonomère éthyléniquement insaturé copolymérisable avec le composé de formule (I) et capable de diminuer la viscosité de ce dernier, et
- de 0,1 à 4 parties en poids d'au moins un accélérateur de décomposition de peroxyde organique,
   et dont le second composant (B) comprend, pour 100 parties en poids de (A) :
- de 3 à 12 parties en poids d'au moins un catalyseur de polymérisation de type peroxyde organique, et
- au moins un accélérateur de polymérisation présent dans une proportion comprise entre 0,5 et 9 fois le poids dudit catalyseur de polymérisation.

Comme exemples de composés de formule (I) utilisables dans la composition de résine selon l'invention on peut citer le 2,2-bis(4-méthacryloxy di-éthoxy phényl)propane, le 2,2-bis(4-méthacryloxy tri-éthoxy phényl)propane, le 2,2-bis(4-méthacryloxy tétraéthoxy phényl)propane, le 2,2-bis(4-méthacryloxy pentaéthoxy phényl) propane, le 2,2-bis(4-méthacryloxy hexaéthoxy phényl)propane, le 2,2-bis(4-méthacryloxy hepta-éthoxy phényl)propane, le 2,2-bis(4-méthacryloxy octa-éthoxy phényl)propane, le 2,2-bis(4-méthacryloxy di-propoxy phényl)propane, le 2,2-bis(4-méthacryloxy tri-propoxy phényl)propane, le 2,2-bis(4-méthacryloxy octa-propoxy phényl) propane, le 2,2-bis(4-méthacryloxy di-butoxy phényl)propane, le 2,2-bis(4-méthacryloxy tri-butoxy phényl)propane, le 2,2-bis(4-méthacryloxy octa-butoxy phényl)propane, le 2,2-bis(4-acryloxy di-éthoxy phényl)propane, le 2,2-bis(4-acryloxy di-butoxy phényl) propane, le 2(4-méthacryloxy di-éthoxy phényl)-2(4-méthacryloxy tri-éthoxy phényl)propane, le 2(4-méthacryloxy di-propoxy phényl)2(4-méthacryloxy tri-éthoxy phényl) propane, le 2,2-bis(4-α-éthylacryloxy di-éthoxy phényl)propane, le 2,2-bis(α-propylacryloxy di-éthoxy phényl)propane et le 2(4-α-éthylacryloxy di-éthoxy phényl)-2(4-méthacryloxy di-éthoxy phényl)propane.

Le comonomère éthyléniquement insaturé présent en option doit être capable de copolymériser totalement avec le composé de formule (I), c'est-à-dire sans rester à l'état libre dans la résine, et aussi être capable de contribuer à la diminution de viscosité du système monomère. De préférence ce comonomère doit aussi être peu volatil et peu odorant de manière à ne pas perdre les avantages liés à l'emploi du composé de formule (I). Comme exemples de tels comonomères on peut citer :
- les (méth)acrylates d'alkyle dont le groupe alkyle est de préférence un groupe alkyle linéaire possédant de 8 à 12 atomes de carbone, tels que l'acrylate et le méthacrylate de n-octyle, l'acrylate et le méthacrylate de n-nonyle, l'acrylate et le méthacrylate de n-décyle et l'acrylate et le méthacrylate de n-dodécyle.
- le styrène et, de préférence, les styrènes substitués par des groupes alkyles tels que les vinyltoluènes, l'alphaméthylstyrène et le tertiobutylstyrène.
- des (méth)acrylates de polyol comme les diacrylates et diméthacrylates de l'éthylèneglycol, du propylèneglycol, du 1,3-butanédiol, du 1,4-butanédiol, du 1,6-hexane-diol, du néopentylglycol, du 1,4-cyclo-hexane-diol, du 1,4-cyclo-hexane-diméthanol, du 2,2,4-triméthyl- 1,3-pentanédiol, du 2-éthyl-2-méthyl- 1,3propanédiol, du 2,2-diéthyl-1,3-propanédiol, du diéthylèneglycol, du dipropylèneglycol, du triéthylèneglycol, du tripropylèneglycol, du tétraéthylèneglycol, du tétrapropylèneglycol, du triméthyloléthane, du triméthylopropane, du glycérol, du pentaérythritol, les triacrylates et triméthacrylates du triméthyloléthane, du triméthylolpropane, du glycérol, du pentaerythritol, les tétraacrylates et tétraméthacrylates du pentaerythritol, les di(méth)acrylates à hexa(méth)acrylates du dipentaerythritol, les poly(méth)acrylates de polyols mono- ou polyéthoxylés ou mono- ou polyproxylés tels que le triacrylate et le triméthacrylate du triméthyol-propane triéthoxylé, du triméthylolpropane tripropoxylé, le triacrylate et le triméthacrylate du glycérol tripropoxylé, le triacrylate, le triméthacrylate, le tétraacrylate et le tétraméthacrylate du pentaérythritol tétraéthoxylé, et leurs mélanges en toutes proportions.
- les (méth)acrylates de dicyclopentényle et de dicyclopentényloxyalkyle tels que l'acrylate et le méthacrylate de dicyclopentényloxyéthyle, l'acrylate et le méthacrylate de dicyclopentényloxyisopropyle et le méthacrylate de dicyclopentényloxynéopentyle.

Comme exemples d'accélérateurs de décomposition de peroxyde organique, on peut citer des sels métalliques, habituellement dénommés "siccatifs", tels que ceux d'acides aliphatiques lourds ayant de 4 à 30 atomes de carbone environ comme les butyrates, pentanoates, hexanoates et octoates, ou encore ceux d'acides naphténiques, ainsi que les amines aromatiques. Le composant métallique de ces sels peut être le calcium, le cuivre, le zinc, le manganèse, le potassium, le plomb, le cobalt, le fer, le vanadium ou le zirconium. Les sels préférés sont les naphténates de cobalt, de potassium et de calcium.

Le second composant (B) comprend principalement un catalyseur de polymérisation du type peroxyde organique de préférence soluble dans le composé de formule (I) et (le cas échéant) le comonomère éthyléniquement insaturé. On entend par la un peroxyde ou hydroperoxyde dérivé d'un composé hydrocarboné possédant de 3 à environ 18 atomes de carbone. Comme exemples de tels catalyseurs on peut citer les hydroperoxydes de tertioburyle, de cumène, de méthyléthylcétone et de diisopropylbenzène ainsi que le peroxyde de benzoyle, le perbenzoate de tertiobutyle, le 2,2 bis (tertiobutylperoxy) butane, le bis (1-hydrorycyclohexyl) peroxyde, le tertiobutylperoxy-isopropylcarbonate et le peroxyde de méthyléthylcétone.

Comme accélérateur de polyménsation présent dans le second composant (B), on peut citer :
- d'une part des monomères et oligomères polyinsaturés, notamment de préférence ceux dont l'insaturation est de type allylique, par exemple le triméthylolpropane diallyl éther, le triallyl isocyanurate et les éthers polyallyliques tels que ceux de formule générale 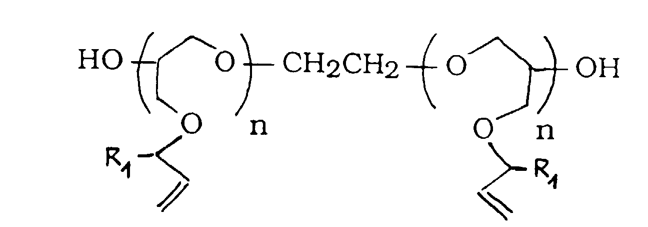 dans laquelle n est un nombre entier allant de 2 à 10 et R₁ est choisi parmi l'hydrogène et le radical méthyle. De tels oligomères sont disponibles commercialement auprès de la société MONSANTO et se présentent sous la forme de liquides incolores. Ils sont particulièrement efficaces par le fait que le carbone situé entre la double liaison allylique et l'oxygène porte au moins, de préférence deux, hydrogène(s) labile(s).
- d'autre part des composés aromatiques portant au moins l'une des fonctions aldhéhyde, éther et acrylique, tels que la vanilline et l'acrylate de benzyle.

Les composés de cette famille ont pour fonction secondaire de diminuer le caractère poisseux du revêtement de sol dans le laps de temps qui suit la pose et par conséquent de diminuer la durée pendant laquelle le sol est impraticable à la déambulation et à la circulation d'engins.

La composition de résine à deux composants (A) et (B) décrite ci-dessus est utilisable dans la constitution d'un revêtement de sol.
- soit en tant que primaire d'accrochage sur une couche de béton ou de mortier hydraulique, auquel cas ledit primaire d'accrochage sera obtenu simplement en mélangeant les composants (A) et (B) sous forme d'une couche de 0,1 à 0,5 mm environ d'épaisseur, selon l'état du support.
- soit en tant que couche de finition sur un mortier synthétique, auquel cas ladite couche de finition sera obtenue en mélangeant les composants (A) et (B) et le cas échéant au moins un pigment organique ou minéral sous forme d'une couche de 0,2 à 0,6 mm environ.

Dans les deux cas, la constitution du système à deux composants est telle que la résine polymérise dans un temps très court pendant l'étape de mélange, le plus souvent un temps ne dépassant pas une heure.

Un second objet de la présente invention consiste en un mortier synthétique comprenant d'une part une composition de résine à deux composants A et B) telle que décrite précédemment et d'autre part des charges minérales inertes dans un rapport en poids, vis-à-vis de la composition de résine (c'est-à-dire de la somme des composants A et B), compris entre 1 et 10 environ. Ainsi dans le mortier synthétique selon l'invention, la résine représente une proportion comprise entre 10% et 50% environ en poids, le reste étant constitué par les charges. Elles peuvent présenter une granulométrie moyenne comprise entre 100 µm et 10 mm environ. Elles peuvent être constituées de sable, de pierre concassée, de gravier, de ciment Portland, de carbonate de calcium, d'argile ou de silice par exemple. En règle générale on choisira les charges de manière à procurer un volume de vide exigeant la quantité minimale de résine pour remplir les vides et à obtenir une bonne facilité de mise en oeuvre. Il est connu que pour des charges de granulométrie constante, de grosses particules exigent moins de résine mais de petites particules procurent un mortier synthétique possédant de meilleures propriétés mécaniques. Ainsi selon la nature et la viscosité de la résine, l'homme du métier pourra sélectionner la granulométrie moyenne des charges adaptée aux propriétés désirées pour le mortier synthétique. Comme pour une couche de finition, le mortier synthétique selon l'invention peut en outre comprendre au moins un pigment organique ou minéral dans les proportions usuelles.

Le procédé de fabrication du mortier synthétique selon l'invention consiste à mélanger efficacement et de manière homogène les composants (A) et (B) de la résine avec les charges minérales inertes dans les proportions de 1 à 10 parties en poids de charges pour 1 partie en poids de la somme des composants (A) et (B). Ce mélange peut être effectué par toute méthode connue dans la technique des mortiers soit manuellement soit, de préférence, en utilisant un dispositif de pesage et de mélange des ingrédients précités. Le mélange peut être effectué sans précaution particulière à toute température comprise entre environ -40°C et + 50°C. Comme dans le cas précédent de la constitution d'un revêtement de sol, le temps nécessaire et suffisant à la polymérisation du mélange est extrêment court, le plus souvent une heure au plus. Selon les applications envisagées, c'est-à-dire selon les lieux dans lesquels le mortier synthétique selon l'invention est utilisé, il se présente de préférence sous forme d'une couche de 1 à 80 mm environ d'épaisseur.

Un autre objet de la présente invention consiste en un procédé de revêtement de sols et parois comprenant l'application, par talochage manuel ou mécanique, d'une composition de résine selon l'invention et/ou d'un mortier synthétique selon l'invention, tels que décrits précédemment. Ce procédé présente de nombreux avantages pour l'applicateur, en particulier l'absence d'odeur liée aux composants de la résine, la vitesse élevée de polymérisation, la disparition rapide après la pose du phénomène de poisseux de la résine (en particulier lorsque la résine et/ou le mortier comprennent un éther polyinsaturé oligomère) et, in fine, la rapidité de la pose du revêtement quelque soit la température dans les locaux de travail.

Un dernier objet de la présente invention consiste en un revêtement de sols ou parois comprenant une composition de résine selon l'invention et/ou un mortier synthétique selon l'invention, tels que décrits précédemment. Lorsque ce revêtement de sol est destiné à être appliqué sur un béton ou mortier hydraulique, il est généralement indispensable que ledit revêtement comprenne :
- d'une part un primaire d'accrochage en contact avec le béton ou mortier hydraulique, comprenant une composition de résine selon l'invention et d'épaisseur de préférence comprise entre 0,1 et 0,5 mm environ.
- d'autre part un mortier synthétique selon l'invention, appliqué sur le primaire d'accrochage et d'épaisseur de préférence comprise entre 1 et 80 mm environ.

Lorsque la porosité du revêtement de sol n'est pas indifférente, notamment pour des raisons d'hygiène et/ou de résistance aux agressions chimiques (par exemple dans des laboratoires, hôpitaux ou locaux de l'industrie alimentaire) ou encore pour des raisons d'esthétique dans des locaux destinés à l'accueil d'une clientèle, le revêtement de sol selon l'invention pourra en outre comprendre une couche de finition, éventuellement colorée par pigmentation, appliquée sur le mortier synthétique et comprenant une composition de résine selon l'invention d'épaisseur de préférence comprise entre 0,2 et 0,6 mm environ. Dans ce cas le revêtement de sol présentera un aspect agréable à l'oeil tout en étant parfaitement lisse et donc aisé à nettoyer, y compris au moyen d'appareils fonctionnant à la vapeur d'eau à une température proche de 100°C.

Les exemples ci-après sont proposés à titre purement illustratif et non limitatif de la présente invention.

### EXEMPLE 1

On forme une composition de résine pour primaire d'accrochage comprenant :
- comme premier composant (A) un mélange de 60 kg de diméthacrylate de bisphénol A éthoxylé commercialisé par la société SARTOMER sous la dénomination SR 348, 8 kg d'acrylate de n-nonyle, 6 kg de triméthacrylate de triméthylolpropane commercialisé par la société SARTOMER sous la dénomination SR 350 et 2 kg de naphténate de cobalt.
- comme second composant (B) 6 kg de peroxyde de méthyléthylcétone commercialisé par la société AKZO sous l'appellation BUTANOX.

La composition obtenue par mélange des composants (A) et (B) est utilisable comme primaire d'accrochage sur un béton ou mortier hydraulique à 20°C.

### EXEMPLE 2

On forme une composition de résine pour mortier synthétique comprenant :
- comme premier composant (A) un mélange de 60 kg du composé SR 348 de SARTOMER, 10 kg d'acrylate de n-nonyle, 7 kg du composé SR 350 de SARTOMER et 2 kg de naphténate de cobalt.
- comme second composant (B) un mélange de 6 kg du peroxyde de méthyléthylcétone BUTANOX et de 20 kg d'éther polyallylique commercialisé par MONSANTO sous la dénomination SANTOLINK XI 100.

Un mortier synthétique utilisable pour le revêtement de sols à la température de 20°C est obtenu en mélangeant les composants (A) et (B) avec 583 kg de charges minérales.

### EXEMPLE 3

On forme une composition de résine pour mortier synthétique comprenant :
- comme premier composant (A) un mélange de 42 kg du composé SR 348 de SARTOMER, 22 kg de diméthacrylate d'héxanediol, 8 kg du composé SR 350 de SARTOMER et 2 kg de naphténate de cobalt.
- comme second composant (B) 6 kg de peroxyde de méthyléthylcétone et 20 kg de SANTOLINK XI 100.

Un mortier synthétique utilisable pour le revêtement de sols à la température de 20°C est obtenu en mélangeant les composants (A) et (B) avec 405 kg de charges minérales.

### EXEMPLE 4

On forme une composition de résine pour mortier synthétique comprenant :
- comme premier composant (A) un mélange de 11,7 kg du composé SR 348 de SARTOMER, 0,9 kg du composé SR 350 de SARTOMER, 1,2 kg d'acrylate de n-nonyle et 0,3 kg de naphténate de cobalt.
- comme second composant (B) 0,9 kg d'hydroxyperoxyde de cumène commercialisé par la société AKZO sous la dénomination TRIGONOX K 80.

Un mortier synthétique utilisable pour le revêtement de sols à la température de 20°C est obtenu en mélangeant les composants (A) et (B) avec 85 kg de charges minérales essentiellement à base de silice possédant une granulométrie comprise entre 0,2 et 2 mm.

### EXEMPLE 5

On forme une composition de résine pour couche de finition comprenant :
- comme premier composant (A) un mélange de 60 kg du composé SR 348 de SARTOMER, 10 kg d'acrylate de n-nonyle, 7 kg du composé SR 350 de SARTOMER et 3 kg de naphténate de cobalt.
- comme second composant (B) un mélange de 5 kg de peroxyde de méthyléthylcétone BUTANOX et de 25 kg du composé SANTOLINK XI 100.

La composition obtenue par mélange des composants (A) et (B) est utilisable comme couche de finition sur un mortier synthétique à 20°C.

## Revendications

1. Composition de résine durcissable à l'air, exempte de paraffine et conditionnée sous forme d'un système à deux composants dont le premier composant (A) comprend, pour 100 parties en poids :
- au moins 50 parties en poids d'au moins un di(alk)acrylate de bisphénol A alcoxylé de formule générale : 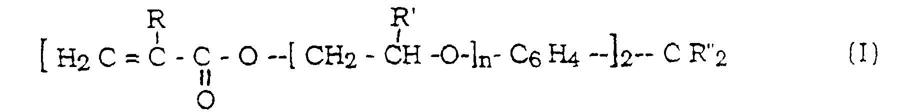 dans laquelle R, R' et R" sont choisis indépendamment l'un de l'autre parmi l'atome d'hydrogène et les radicaux alkyles ayant de 1 a 4 atomes de carbone et n est un entier de 1 à 10,
- de 0 à 46 parties en poids d'au moins un comonomère éthyléniquement insaturé copolymérisable avec le composé de formule (I) et capable de diminuer la viscosité de ce dernier, et
- de 0,1 à 4 parties en poids d'au moins un accélérateur de décomposition de peroxyde organique,
et dont le second composant (B) comprend pour 100 parties en poids de (A) :
- de 3 à 12 parties en poids d'au moins un catalyseur de polymérisation de type peroxyde organique, et
- au moins un accélérateur de polymérisation présent dans une proportion comprise entre 0,5 et 9 fois le poids dudit catalyseur de polymérisation.

2. Composition de résine selon la revendication 1, caractérisée en ce que le comonomère éthyléniquement insaturé copolymérisable avec le composé de formule (I) est choisi parmi les (méth)acrylates d'alkyle linéaire dont le groupe alkyle possède de 8 à 12 atomes de carbone, le styrène et ses dérivés substitués par des groupes alkyles, les (méth)acrylates de polyols et les (méth)acrylates de dicyclopentényle et de dicyclopentényloxyalkyle.

3. Composition de résine selon l'une des revendications 1 et 2, caractérisée en ce que l'accélérateur de décomposition présent dans le composant (A) est choisi parmi les sels métalliques d'acides aliphatiques lourds ayant de 4 à 30 atomes de carbone ou d'acides naphténiques et les amines aromatiques.

4. Composition de résine selon l'une des revendications 1 à 3, caractérisée en ce que le catalyseur de polymérisation du composant (B) est choisi parmi les peroxydes et hydroperoxydes dérivés de composés hydrocarbonés possédant de 3 à 18 atomes de carbone.

5. Composition de résine selon l'une des revendications 1 à 4, caractérisée en ce que l'accélérateur de polymérisation présent dans le composant (B) est choisi parmi des monomères et oligomères polyinsaturés.

6. Composition de résine selon la revendication 5, caractérisée en ce que l'insaturation desdits monomères et oligomères est de type allylique.

7. Composition de résine selon la revendication 6, caractérisée en ce que ledit monomère ou oligomère polyinsaturé est choisi parmi le triméthylolpropane diallyl éther, le triallyl isocyanurate et les éthers polyallyliques de formule générale 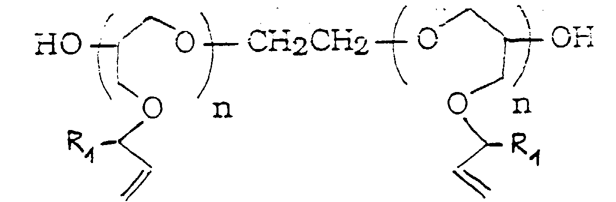 dans laquelle n est un nombre entier allant de 2 à 10 et R₁ est choisi parmi l'hydrogène et le radical méthyle.

8. Composition de résine selon l'une des revendications 1 à 4, caractérisée en ce que l'accélérateur de polymérisation présent dans le composé (B) est un composé aromatique portant au moins l'une des fonctions aldéhyde, éther et acrylique.

9. Composition de résine selon la revendication 8, caractérisée en ce que l'accélérateur de polymérisation présent dans le composé (B) est choisi parmi la vanilline et l'acrylate de benzyle.

10. Composition de résine selon l'une des revendications 1 à 9, caractérisée en ce qu'elle comprend en outre au moins un pigment organique ou minéral.

11. Mortier synthétique comprenant d'une part une composition de résine selon l'une des revendications 1 à 10 et d'autre part des charges inertes dans un rapport en poids, vis-à-vis de la composition de résine, compris entre 1 et 10.

12. Mortier synthétique selon la revendication 11, caractérisé en ce que la granulométrie moyenne des charges minérales inertes est comprise entre 100 µm et 10 mm.

13. Procédé de fabrication d'un mortier synthétique selon l'une des revendications 11 et 12, consistant à mélanger efficacement et de manière homogène les composants (A) et (B) de la résine avec les charges minérales inertes dans les proportions de 1 à 10 parties en poids de charges pour 1 partie en poids de la somme des composants (A) et (B).

14. Procédé de fabrication de mortier synthétique selon la revendication 13, caractérisé en ce que le mélange est effectué à une température comprise entre - 40°C et + 50°C.

15. Procédé de revêtement de sols et parois comprenant l'application, par talochage manuel ou mécanique, d'une composition de résine selon l'une des revendications 1 à 10 et/ou d'un mortier synthétique selon l'une des revendications 11 et 12.

16. Revêtement de sols ou parois comprenant une composition de résine selon l'une des revendications 1 à 10 et/ou un mortier synthétique selon l'une des revendications 11 et 12.

17. Revêtement de sols selon la revendication 16, destiné à être appliqué sur un béton ou mortier hydraulique, comprenant :
- d'une part un primaire d'accrochage en contact avec le béton ou mortier hydraulique, comprenant une composition de résine selon l'une des revendications 1 à 10 et d'épaisseur comprise entre 0,1 et 0,5 mm.
- d'autre part un mortier synthétique selon l'une des revendications 11 et 12, appliqué sur le primaire d'accrochage et d'épaisseur comprise entre 1 et 80 mm environ.

18. Revêtement de sols selon la revendication 17, caractérisé en ce qu'il comprend en outre une couche de finition, appliquée sur le mortier synthétique et comprenant une composition de résine selon l'une des revendications 1 à 10, d'épaisseur comprise entre 0,2 et 0,6 mm.

## Claims

1. Paraffin-free resin composition which is curable in the air and which is packaged in the form of a two-component system, the first component (A) of which comprises, per 100 parts by weight:
- at least 50 parts by weight of at least one alkoxylated bisphenol A di(alk)acrylate of general formula: 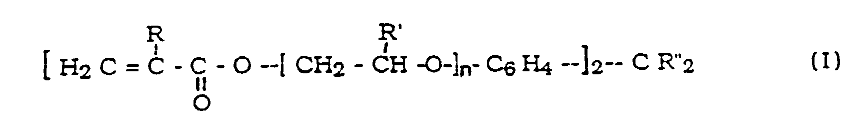 in which R, R' and R" are chosen, independently of one another, from the hydrogen atom and alkyl radicals having from 1 to 4 carbon atoms and n is an integer from 1 to 10,
- from 0 to 46 parts by weight of at least one ethylenically unsaturated comonomer which is copolymerizable with the compound of formula (I) and which is capable of decreasing the viscosity of the latter, and
- from 0.1 to 4 parts by weight of at least one organic peroxide decomposition accelerator,
and the second component (B) of which comprises, per 100 parts by weight of (A):
- from 3 to 12 parts by weight of at least one polymerization catalyst of organic peroxide type, and
- at least one polymerization accelerator present in a proportion of between 0.5 and 9 times the weight of the said polymerization catalyst.

2. Resin composition according to Claim 1, characterized in that the ethylenically unsaturated comonomer which is copolymerizable with the compound of formula (I) is chosen from linear alkyl (meth)acrylates in which the alkyl group possesses from 8 to 12 carbon atoms, styrene and its derivatives substituted by alkyl groups, polyol (meth)acrylates and dicyclopentenyl and dicyclopentenyloxyalkyl (meth)acrylates.

3. Resin composition according to either of Claims 1 and 2, characterized in that the decomposition accelerator present in the component (A) is chosen from metal salts of heavy aliphatic acids having from 4 to 30 carbon atoms or of naphthenic acids and aromatic amines.

4. Resin composition according to one of Claims 1 to 3, characterized in that the catalyst for polymerization of the component (B) is chosen from peroxides and hydroperoxides derived from hydrocarbon compounds possessing from 3 to 18 carbon atoms.

5. Resin composition according to one of Claims 1 to 4, characterized in that the polymerization accelerator present in the component (B) is chosen from polyunsaturated monomers and oligomers.

6. Resin composition according to Claim 5, characterized in that the unsaturation of the said monomers and oligomers is of allyl type.

7. Resin composition according to Claim 6, characterized in that the said polyunsaturated monomer or oligomer is chosen from trimethylolpropane diallyl ether, triallyl isocyanurate and polyallyl ethers of general formula 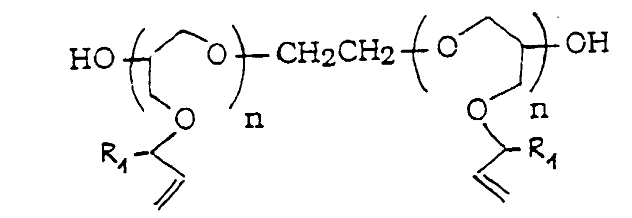 in which n is an integer ranging from 2 to 10 and R₁ is chosen from hydrogen and the methyl radical.

8. Resin composition according to one of Claims 1 to 4, characterized in that the polymerization accelerator present in the compound (B) is an aromatic compound carrying at least one of the aldehyde, ether and acrylic functional groups.

9. Resin composition according to Claim 8, characterized in that the polymerization accelerator present in the compound (B) is chosen from vanillin and benzyl acrylate.

10. Resin composition according to one of Claims 1 to 9, characterized in that it additionally comprises at least one organic or inorganic pigment.

11. Synthetic mortar comprising, on the one hand, a resin composition according to one of Claims 1 to 10 and, on the other hand, inert fillers in a ratio by weight, with respect to the resin composition, of between 1 and 10.

12. Synthetic mortar according to Claim 11, characterized in that the mean particle size of the inert inorganic fillers is between 100 µm and 10 mm.

13. Process for the manufacture of a synthetic mortar according to either of Claims 11 and 12, comprising the efficient and homogeneous mixing of the components (A) and (B) of the resin with the inert inorganic fillers in the proportions of 1 to 10 parts by weight of fillers per 1 part by weight of the sum of the components (A) and (B).

14. Process for the manufacture of synthetic mortar according to Claim 13, characterized in that the mixing is carried out at a temperature of between -40°C and +50°C.

15. Process for covering floors and walls, comprising the application, by manual or mechanical floating, of a resin composition according to one of Claims 1 to 10 and/or of a synthetic mortar according to either of Claims 11 and 12.

16. Floor or wall covering comprising a resin composition according to one of Claims 1 to 10 and/or a synthetic mortar according to either of Claims 11 and 12.

17. Floor covering according to Claim 16, intended to be applied on a hydraulic mortar or concrete, comprising:
- on the one hand, a bonding primer in contact with the hydraulic mortar or concrete comprising a resin composition according to one of Claims 1 to 10 and with a thickness of between 0.1 and 0.5 mm,
- on the other hand, a synthetic mortar according to either of Claims 11 and 12 applied on the bonding primer and with a thickness of between 1 and 80 mm approximately.

18. Floor covering according to Claim 17, characterized in that it additionally comprises a finishing layer applied on the synthetic mortar and comprising a resin composition according to one of Claims 1 to 10 with a thickness of between 0.2 and 0.6 mm.

## Patentansprüche

1. Lufthärtbare, paraffinfreie Harzzusammensetzung, die in Form eines Zweikomponentensystems formuliert ist, wobei die erste Komponente (A) pro 100 Gew.-Teile:
- mindestens 50 Gew.-Teile mindestens eines alkoxylierten Bisphenol-A-di (alk)acrylats der allgemeinen Formel: 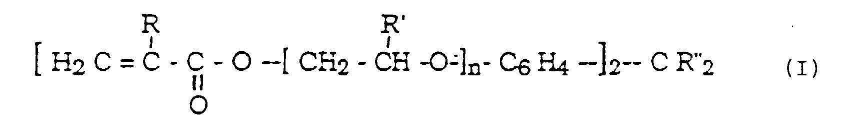 worin R, R' und R" unabhängig voneinander aus der Gruppe bestehend aus Wasserstoffatom und Alkylresten mit 1 bis 4 Kohlenstoffatomen ausgewählt sind und n eine ganze Zahl von 1 bis 10 bedeutet,
- 0 bis 46 Gew.-Teile mindestens eines ethylenisch ungesättigten, mit der Verbindung der Formel (I) copolymerisierbaren und zur Verminderung der Viskosität dieser Verbindung befähigten Comonomers, sowie
- 0,1 bis 4 Gew.-Teile mindestens eines die Zersetzung organischer Peroxide beschleunigenden Mittels enthält,
und wobei die zweite Komponente (B) pro 100 Gew.-Teile (A) :
- 3 bis 12 Gew.-Teile mindestens eines Polymerisationskatalysators vom Typ organischer Peroxide und
- mindestens einen Polymerisationsbeschleuniger enthält, der in einem Anteil zwischen der 0,5- und 9 - f a c h e n Gewichtsmenge des Polymerisationskatalysators vorliegt.

2. Harzzusammensetzung nach Anspruch 1, dadurch gekennzeichnet, daß das ethylenisch ungesättigte, mit der Verbindung der Formel (I) copolymerisierbare Comonomer aus linearen Alkyl(meth)acrylaten, deren Alkylgruppe 8 bis 12 Kohlenstoffatome aufweist, Styrol und dessen durch Alkylgruppen substituierten Derivaten, Polyol-(meth)acrylaten und Dicyclopentenyl- und Dicyclopentenyloxyalkyl- (meth) acrylaten ausgewählt ist.

3. Harzzusammensetzung nach Anspruch 1 oder 2, dadurch gekennzeichnet, daß das in der Komponente (A) vorliegende, die Zersetzung beschleunigende Mittel aus Metallsalzen von schwerflüchtigen aliphatischen Säuren mit 4 bis 30 Kohlenstoffatomen oder von Naphthensäuren und aus aromatischen Aminen ausgewählt ist.

4. Harzzusammensetzung nach einem der Ansprüche 1 bis 3, dadurch gekennzeichnet, daß der Polymerisationskatalysator der Komponente (B) aus Peroxiden und Hydroperoxiden ausgewählt ist, die sich von Kohlenwasserstoffverbindungen mit 3 bis 18 Kohlenstoffatomen ableiten.

5. Harzzusammensetzung nach einem der Ansprüche 1 bis 4, dadurch gekennzeichnet, daß der in Komponente (B) vorliegende Polymerisationsbeschleuniger aus mehrfach ungesättigten Monomeren und Oligomeren ausgewählt ist.

6. Harzzusammensetzung nach Anspruch 5, dadurch gekennzeichnet, daß die Ungesättigtheit der Monomere und Oligomere vom Typ Allyl ist.

7. Harzzusammensetzung nach Anspruch 6, dadurch gekennzeichnet, daß das mehrfach ungesättigte Monomer bzw. Oligomer aus der Gruppe bestehend aus Trimethylolpropan-diallylether, Triallyl-isocyanurat und Polyallylethern der allgemeinen Formel 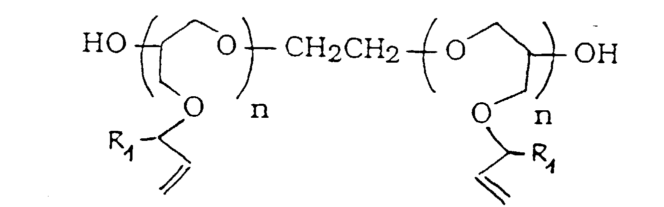 ausgewählt ist, worin n eine ganze Zahl zwischen 2 und 10 bedeutet und R₁ aus der Gruppe bestehend aus Wasserstoff und Methylrest ausgewählt ist.

8. Harzzusammensetzung nach einem der Ansprüche 1 bis 4, dadurch gekennzeichnet, daß der in Komponente (B) vorliegende Polymerisationsbeschleuniger eine aromatische Verbindung ist, die mindestens eine der funktionellen Gruppen Aldehyd, Ether und Acryl trägt.

9. Harzzusammensetzung nach Anspruch 8, dadurch gekennzeichnet, daß der in Komponente (B) vorliegende Polymerisationsbeschleuniger aus der Gruppe bestehend aus Vanillin und Benzylacrylat ausgewählt ist.

10. Harzzusammensetzung nach einem der Ansprüche 1 bis 9, dadurch gekennzeichnet, daß sie außerdem mindestens ein organisches oder anorganisches Pigment enthält.

11. Kunstmörtel, der einerseits eine Harzzusammensetzung nach einem der Ansprüche 1 bis 10 und andererseits mineralische Inert-Füllstoffe in einem Gewichtsverhältnis zwischen 1 und 10, bezogen auf die Harzzusammensetzung, enthält.

12. Kunstmörtel nach Anspruch 11, dadurch gekennzeichnet, daß die mittlere Teilchengröße der mineralischen Inert-Füllstoffe zwischen 100 µm und 10 mm liegt.

13. Verfahren zur Herstellung eines Kunstmörtels nach einem der Ansprüche 11 und 12, das darin besteht, daß man die Harzkomponenten (A) und (B) mit den mineralischen Inert-Füllstoffen in Anteilen von 1 bis 10 Gewichtsteilen Füllstoff pro 1 Gew.-Teil der Summe aus den Komponenten (A) und (B) wirkungsvoll und homogen vermischt.

14. Verfahren zur Herstellung von Kunstmörtel nach Anspruch 13, dadurch gekennzeichnet, daß das Vermischen bei einer Temperatur zwischen -40°C und +50°C erfolgt.

15. Verfahren zur Herstellung von Bodenbelägen und Wandverkleidungen durch Auftragen einer Harzzusammensetzung nach einem der Ansprüche 1 bis 10 und/oder eines Kunstmörtels nach Anspruch 11 oder 12 mittels manueller oder maschineller Verputzarbeit.

16. Bodenbelag oder Wandverkleidung, enthaltend eine Harzzusammensetzung nach einem der Ansprüche 1 bis 10 und/oder einen Kunstmörtel nach Anspruch 11 oder 12.

17. Bodenbelag nach Anspruch 16, der durch Auftragen auf Beton oder hydraulischem Mörtel hergestellt werden soll, enthaltend:
- einerseits eine mit dem Beton oder hydraulischen Mörtel in Kontakt stehende Grundierschicht, die eine Harzzusammensetzung nach einem der Ansprüche 1 bis 10 enthält und eine Dicke zwischen 0,1 und 0,5 mm aufweist, und
- andererseits einen Kunstmörtel nach Anspruch 11 oder 12, der auf die Grundierschicht aufgetragen wird und eine Dicke zwischen ca. 1 und 80 mm aufweist.

18. Bodenbelag nach Anspruch 17, dadurch gekennzeichnet, daß er außerdem eine Deckschicht enthält, die auf den Kunstmörtel aufgetragen wird, eine Harzzusammensetzung nach einem der Ansprüche 1 bis 10 enthält und eine Dicke zwischen 0,2 und 0,6 mm aufweist.
